**Europäisches Patentamt**

**European Patent Office**

**Office européen des brevets**

(19)

(11) Numéro de publication: **0 029 377**
**B1**

(12)

# FASCICULE DE BREVET EUROPÉEN

(45) Date de publication du fascicule du brevet:
**23.07.86**

(51) Int. Cl.⁴: **B 60 N 1/06**

(21) Numéro de dépôt: **80401560.0**

(22) Date de dépôt: **31.10.80**

(54) Sièges réglables de véhicules et leurs mécanismes de réglage.

(30) Priorité: **14.11.79 FR 7928119**

(43) Date de publication de la demande:
**27.05.81 Bulletin 81/21**

(45) Mention de la délivrance du brevet:
**23.07.86 Bulletin 86/30**

(84) Etats contractants désignés:
**BE DE GB IT NL SE**

(56) Documents cité:
**DE-A-2 051 127**
**DE-A-2 604 620**
**FR-A-912 188**
**FR-A-1 448 282**
**FR-A-2 078 553**

(73) Titulaire: **SOCIETE INDUSTRIELLE BERTRAND FAURE, Brières les Scellés, F-91150 Etampes (FR)**

(72) Inventeur: **Boisset, Bernard, 4, Clos de Montfaucon, F-91150 Etampes (FR)**

(74) Mandataire: **Behaghel, Pierre, CABINET PLASSERAUD 84 rue d'Amsterdam, F-75009 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1986

## Description

L'invention est relative aux sièges de vehicules comprenant une assise, un dossier et un mécanisme propre à régler l'inclinaison du dossier ou la hauteur de l'arrière de l'assise, et ce à partir des rotations d'au moins une manette de commande d'axe transversal.

De tels sièges sont par exemple connus par les brevets FR-A-1 448 282 et FR-A-2 078 553.

L'invention vise plus particulièrement, parce que c'est dans leur cas que son application semble devoir offrir le plus d'intérêt, mais non exclusivement, parmi les sièges considérés, ceux pour lesquels la place disponible latéralement aux endroits généralement occupés par les manettes de commande rotatives des mécanismes de réglage équipant les sièges du genre en question est réduite: c'est le cas de certains sièges du type "baquet" conçus de manière à résister à l'écrasement transversal et destinés à être logés quasi-jointivement dans des auges faisant partie de l'ossature résistante du véhicule, sièges tels que ceux décrits dans le brevet FR-A-2468 478 de la demanderesse.

L'invention permet de remédier à un tel inconvénient et plus généralement de faciliter considérablement les manoeuvres de réglage, lesquels peuvent être exécutés sans contorsion par la personne assise sur le siège.

Elle est essentiellement caractérisée en ce que chaque manette de commande est reportée, ainsi que son axe transversal à l'extrémité avant d'un côté de l'assise de telle façon que le simple repos du bras correspondant de l'usager amène tout naturellement sa main en position sur cette manette et en ce que le mécanisme de réglage met en oeuvre les rotations d'une barre rigide s'étendant sur toute la largeur du siège, rotations commandées à partir de la manette par l'intermédiaire d'une chaîne ou courroie coopérant avec deux roues dentées ou analogues angulairement solidaires respectivement de cette manette et de cette barre.

Dans des modes de réalisation préférés, on a recours en outre à l'une et/ou à l'autre des dispositions suivantes:

- la barre est solidaire, à chacune de ses deux extrémites, d'un galet cylindrique de révolution portant deux pions excentrés parallèles propres à coagir avec une denture comprise par l'embase fixe du siège et s'étendant selon un arc de cercle sensiblement vertical, ledit galet étant logé jointivement dans une lumière allongée horizontalement liée à l'ossature de l'assise, des moyens élastiques étant associés à la barre de façon à solliciter constamment les pions vers le fond d'encoches des dentures correspondantes, et une bielle rigide étant prévue pour maintenir constant l'écartement des axes de l'organe de commande et de la barre tout en autorisant leurs légers déplacements horizontaux nécessaires pour permettre les déplacements alternatifs des pions hors de leurs encoches à l'encontre de l'effort de rappel des moyens élastiques,

- dans un siège équipé de deux mécanismes selon l'alinéa précédent destinés à régler respectivement la hauteur de l'avant et celle de l'arrière du siège, chacune des deux lumières allongées horizontalement qui reçoivent respectivement les deux galets, de l'un des deux mécanismes, prévus respectivement des deux côtés du siège, est évidée dans un basculeur monté pivotant autour d'un axe transversal fixe de l'embase du siège, axe situé de préférence au niveau du milieu de la denture correspondant au galet considéré, denture qui est centrée sur ledit axe,

- dans un siège selon l'alinéa précédent, pour lequel les basculeurs sont associés au mécanisme de réglage de hauteur arrière, des moyens élastiques sont prévus pour solliciter angulairement en permanence les basculeurs dans le sens correspondant à une élévation de l'arrière du siège, ces moyens étant avantageusement constitués par un fort ressort hélicoïdal de tension tendu, selon une direction sensiblement horizontale, entre un point de l'embase du siège et un point haut de l'un des deux basculeurs,

- dans un siège selon au moins l'alinéa qui précède le précédent, les deux basculeurs sont constitués par des plaques réunies entre elles par un tube transversal rigide dont les extrémités sont fixées sur ces basculeurs,

- dans un siège selon l'alinéa précédent, le tube rigide est traversé par la barre rigide reliant entre eux les deux galets du mécanisme arrière.

L'invention comprend, mises à part ces dispositions principales, certaines autres dispositions qui s'utilisent de préférence en même temps et dont il sera plus explicitement question ci-après.

Dans ce qui suit, l'on va décrire un mode de réalisation préféré de l'invention en se référant aux dessins ci-annexés d'une manière bien entendu non limitative.

La figure 1, de ces dessins, montre latéralement la base d'un siège de véhicule équipée de deux mécanismes de réglage selon l'invention.

Les figures 2 et 3 font apparaître, selon la même direction latérale que la figure 1, deux pièces de l'un de ces mécanismes, pièces qui sont respectivement peu ou pas visibles sur cette figure 1.

La figure 4 montre en plan, à plus grande échelle, avec un certain nombre de portions en coupes, la même base de siège ou plus précisément les quatre coins de cette base.

La figure 5 montre l'ensemble dudit siège en vue perspective.

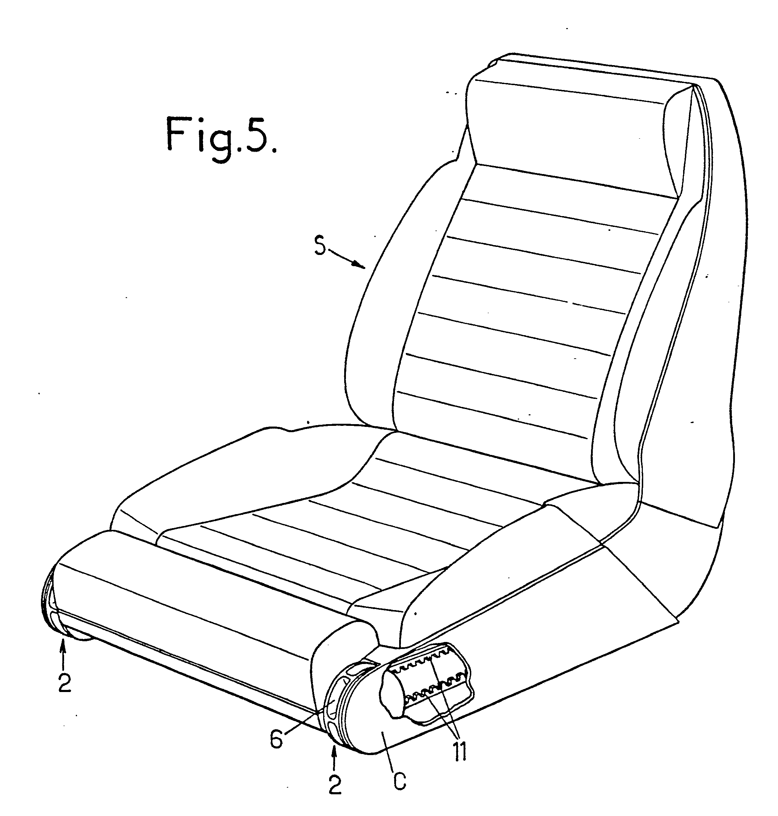

Le siège S (figure 5) de véhicule considéré est équipé de deux mécanismes de réglage, l'un concernant la hauteur de l'avant du siège et l'autre la hauteur de l'arrière de ce siège: on sait que deux tels mécanismes permettent par leurs actions combinées de régler à volonté la hauteur et/ou l'inclinaison de l'ensemble du siège.

Au lieu d'être disposés sur l'un des flancs du siège, à l'arrière de celui-ci ou en un point intermédiaire de sa dimension longitudinale, comme dans les constructions connues, les organes ou manettes de commande des deux mécanismes de réglage, qui sont montés rotatifs autour d'axes transversaux, c'est-à-dire s'étendant selon la largeur du siège, sont ici reportés, y compris leurs axes de rotation, à l'avant du siège, ou plus précisément aux extrémités avant de ses deux côtés, de préférence assez haut, un peu comme si chacun de ces organes se trouvait à l'extrémité avant d'un bras de fauteuil de faible hauteur.

Cette disposition présente plusieurs avantages et en particulier les suivants. Les manettes en question sont beaucoup plus facilement accessibles par les mains de l'usager du siège que les organes de commande des mécanismes connus. On sait que, vu la situation de ces organes connus, généralement assez basse et assez en arrière du siège, leur manoeuvre exige de véritables contorsions de l'usager, de telle sorte que ce dernier préfère souvent se contenter d'un siège mal réglé plutôt que de tenter de corriger la position de son siège moyennant une telle manoeuvre: dans le cas présent, au contraire, le simple repos des bras de l'usager assis le long de son corps amène tout naturellement ses mains en position sur lesdites manettes.

De plus, et surtout, le report en question des manettes à l'avant du siège permet de dégager latéralement l'assise de ce siège et donc de placer cette dernière d'une manière quasi-jointive dans une auge rigide faisant partie de la structure résistante du véhicule, ladite assise pouvant alors être agencée de façon telle qu'elle contribue par elle-même à la résistance transversale du véhicule à l'écrasement.

Dans le mode de réalisation préféré illustré, les deux manettes de commande 1 et 2 sont constituées par des galettes 3 admettant un même axe transversal X et prolongées radiale ment en étoile par des pattes 4, l'ensemble de la galette étoilée présentant un diamètre relativement grand, de préférence compris entre 10 et 15 cm.

Ces pattes sont en outre contenues entre deux disques circulaires latéraux 5 qui délimitent avec elles des alvéoles 6 propres à recevoir les doigts de l'usager (généralement pouce et index).

Des congés de raccordement 7 sont de préférence prevus entre ces différents éléments (galettes, pattes et disques) et au niveau de leurs arêtes de façon à rendre agréable aux doigts le toucher des manettes et en particulier celui des fonds des alvéoles.

Les rotations de commande des manettes ainsi définies font essentiellement appel au passage d'une patte 4 de sa position supérieure à sa position avant par poussée de celle-ci ou au passage inverse par traction sur cette patte: un seul doigt (pouce ou index) de la main qui recouvre alors pratiquement la manette suffit pour assurer cette poussée ou cette traction. Il ne s'agit pas ici d'une préhension d'une poignée à pleine main avec serrage de cette poignée, ce qui exigerait de la place en bout d'arbre: dans le cas présent, la manette peut même être noyée dans un carter C (figure 5) laissant seul accessible de l'extérieur son quadrant supérieur avant prolongé angulairement de deux plages de l'ordre de 30 à 45° respectivement à l'avant vers le bas et en haut vers l'arrière.

Chacun des réglages en hauteur proprement dits est assuré à partir des rotations d'une barre rigide d'axe transversal, c'est-à-dire s'étendant selon la largeur du siège, barre désignée par la référence 8 pour le mécanisme avant et par la référence 9 pour le mécanisme arrière.

Les rotations de chaque manette de commande 1, 2 sont transmises à la barre correspondante 8, 9 au moyen d'un système de transmission à distance.

Ce système comprend de préférence des chaînes ou courroies crantées (10 pour la commande avant, 11 pour la commande arrière) propres à coopérer avec des roues qui sont dentées ou crantées en correspondance et qui sont solidaires respectivement des manettes 1 et 2 (roues avant 12, 13) et des barres 8 et 9 (respectivement roue intermédiaire 14 et roue arrière 15).

Le rapport entre le nombre des dents des deux roues avant (12, 13) et celui des deux autres roues (14, 15) est avantageusement de 2 à 1 de telle sorte que déplacement d'un angle a d'une manette se traduise par un déplacement d'un angle 2a de la barre correspondante.

En particulier, une rotation de 90° d'une manette se traduit par une rotation de 180° de la barre associée, ce qui est particulièrement avantageux, comme on le verra plus loin, pour le mode de réalisation préféré illustré.

Pour cette raison, le nombre des pattes 4 de chaque manette est de préférence égal à quatre, chaque manoeuvre correspondant à un déplacement angulaire d'une manette égal à 90° ou à un multiple de 90° et ladite manette reprenant donc, après chaque manoeuvre, une position angulaire pour laquelle elle présente toujours ses pattes 4 aux mêmes positions radiales.

On va décrire d'abord, dans ce qui suit, le mécanisme de réglage de la hauteur de l'extrémité avant du siège, mécanisme mettant en oeuvre les rotations de la barre avant 8, lesquelles sont ici commandées par les rotations de la manette de gauche 1.

La barre 8 porte à chacune de ses deux extrémités axiales un galet cylindrique de révolution 16 de même axe Y que cette barre et portant lui-même deux pions cylindriques 17 excentrés d'axes parallèles à l'axe Y et symétriques l'un à l'autre par rapport à cet axe Y.

Chaque galet est logé jointivement dans une lumière 18 allongée horizontalement, solidaire de l'extrémité avant de l'ossature de l'assise du siège, extrémité dont on désire régler la hauteur.

Quant aux pions 17, ils coagissent avec une denture verticale 19 évidée dans un flasque vertical longitudinal 20 faisant partie de l'embase 21 du siège: cette denture 19 s'étend selon un arc de cercle sensiblement vertical centré en première approximation sur l'axe Z de la barre arrière 9.

Les deux flasques 20 parallèles, de même que l'ensemble de l'embase 21 du siège dont ils sont solidaires, sont avantageusement fixés de façon connue en soi sur deux glissières 22 parallèles agencées de manière à permettre le réglage longitudinal du siège.

Les lumières 18 sont ici évidées dans des pastilles 23 qui sont soudées aux extrémités d'un tube transversal 24 faisant partie de l'ossature de l'assise.

Deux ressorts hélicoïdaux de tension 25, tendus chacun entre une patte 26 faisant partie de l'embase 21 et la barre 8, ont pour effet de solliciter constamment les pions 17 au fond des encoches des dentures 19. L'accrochage de ces ressorts 24 sur la barre 8 est effectuée, à travers des ouvertures 27 du tube 24, de manière à rendre possibles les rotations de la barre 8 autour de son axe Q.

Cette barre 8 est avantageusement constituée par un tube terminé par deux embouts cylindriques pleins emmanchés dans ce tube.

La manette 1 est montée folle sur un arbre 28 d'axe X, lequel est lui-même logé dans deux lumières allongées horizontalement 29 de l'embase 21.

Enfin une bielle 30, traversée jointivement à ses deux extrémités par respectivement l'arbre 28 et une portée de révolution de la barre 8, permet de maintenir constant l'écart entre les axes X et Y tout en autorisant les déplacements horizontaux de l'ensemble.

Le fonctionnement du mécanisme ainsi décrit est le suivant.

Au repos, les deux pions 17 de chacun des deux galets 16 sont fermement introduits au fond de deux encoches des dentures 19 correspondantes par la traction des ressorts 25.

L'extrémité avant de l'assise repose alors à une hauteur bien déterminée sur l'embase 21 par l'intermédiaire des bords de ses lumières 18, des galets 16, des pions 17 et des dents à flancs horizontaux, des dentures 19, en prise avec ces pions 17.

La barre 8 se trouve elle-même en sa position la plus avancée et, du fait de l'existence de la bielle 30, il en est de même de la manette 1.

Pour modifier la hauteur de l'extrémité avant de l'assise, il suffit de faire tourner la manette 1.

Pendant la première partie de cette rotation la barre 8, elle-même sollicitée en rotation par l'intermédiaire de la roue 12, de la chaîne 10 et de la roue 14, commence par pivoter autour des deux pions 17 situés respectivement des deux côtés du siège et matérialisant un axe de tourillonnement, alors que les deux autres pions 17 se dégagent de leurs encoches en faisant reculer légèrement l'ensemble de la barre 8 et de la manette 1 le long des lumières allongées correspondantes 18 et 29 (seule la lumière de gauche du siège si l'on regarde vers l'avant de celui-ci étant à considérer pour cette manoeuvre).

En même temps, les ressorts 25 s'étirent. A partir du moment où chaque pion 17 dégagé est parvenu au même niveau que son partenaire du même galet, il se rapproche progressivement à nouveau de la denture correspondante pour s'introduire finalement dans l'encoche située immédiatement au-dessus ou au-dessous de celle occupée en permanence par son dit partenaire constituant tourillon: ce rapprochement est assuré automatiquement par le rappel élastique des ressorts 25.

A la fin de cette introduction, le mécanisme occupe un nouvel état stable correspondant à un réglage en hauteur de l'avant de l'assise différent du précédent.

Entre deux tels états stables successifs de réglage, chaque galet 16 tourne de 180° et la manette 1, de 90° Bien entendu, pour assurer le réglage désiré en hauteur, on peut faire tourner la manette 1 de 90° seulement ou bien d'un multiple de cet angle, et ce dans l'un ou l'autre sens suivant que l'on désire élever ou au contraire abaisser l'extrémité avant considérée.

Le réglage en hauteur de l'extrémité arrière de l'assise exploite de manière tout à fait analogue les déplacements angulaires de la barre arrière 9, lesquels sont commandés par les rotations de la manette de droite 2, ces rotations étant transmises à cette barre 9 par la roue 13, la chaîne 11 et la roue 15.

Comme précédemment, on retrouve dans ce mécanisme arrière des galets 31 à pions 32 montés sur les deux extrémités de la barre 9 et propres à coagir respectivement avec des lumières 33 allongées horizontalement et avec des dentures 34 sensiblement verticales.

Mais si les dentures 34 sont encore évidées dans les flasques 20 de l'embase, les lumières 33 sont ici évidées dans des basculeurs 35, eux-mêmes montés pivotants sur des plots ou tourillons 36 soudés sur les flasques 20.

Ces basculeurs sont entretoisés par un tube 37 faisant partie de l'ossature de l'assise, tube fixé sur lesdits basculeurs et contenant la barre 9.

Le rappel des pions 32 au fond des encoches des dentures 34 est assuré par des ressorts hélicoïdaux de tension 38 tendus entre des pattes 39 solidaires des basculeurs et la barre 9 elle-même, ce pour quoi ces ressorts traversent des ouvertures 40 du tube 37.

L'axe Z de la barre 9 est lié mécaniquement à celui X de l'arbre 28 de la manette 2 à l'aide d'une bielle rigide 41.

Les dentures 34 sont ici centrées sur l'axe commun W des plots 36, lequel axe est disposé en avant de ces dentures, par exemple à une distance de celles-ci d'environ 7 cm, au milieu de leur hauteur.

Ce montage à basculeurs présente les avantages suivants:

- il assure une liaison mécanique rigide permanente selon la direction longitudinale du siège entre l'assise et l'embase de ce siège, et ce quelle que soit la position des barres 8 et 9,

- il permet d'assurer très simplement l'application d'une poussée ascendante sur l'arrière du siège en vue de compenser le poids de la personne assise sur ce siège: il suffit à cet effet d'accrocher au moins un fort ressort hélicoïdal de tension 42 s'étendant selon une direction sensiblement horizontale entre un point 43 d'un flasque 20 et un point haut 44 de l'un des deux basculeurs 35.

Dans le mode de réalisation illustré, qui comprend deux manettes situées respectivement des deux côtés du siège, la commande de l'un des deux mécanismes par rotation de l'une de ces manettes fait intervenir un léger recul de cette dernière alors que l'autre manette demeure en place: ce recul isolé se traduit par une légère inclinaison de l'axe X sur la direction transversale du siège, mais cette inclinaison n'est pas perceptible dans la pratique vu que l'amplitude dudit recul est très faible, étant généralement inférieure à 1 cm et par exemple de l'ordre de 3 mm alors que l'écartement axial entre les deux lumières 29 qui supportent l'arbre 28 est de l'ordre de 50 cm.

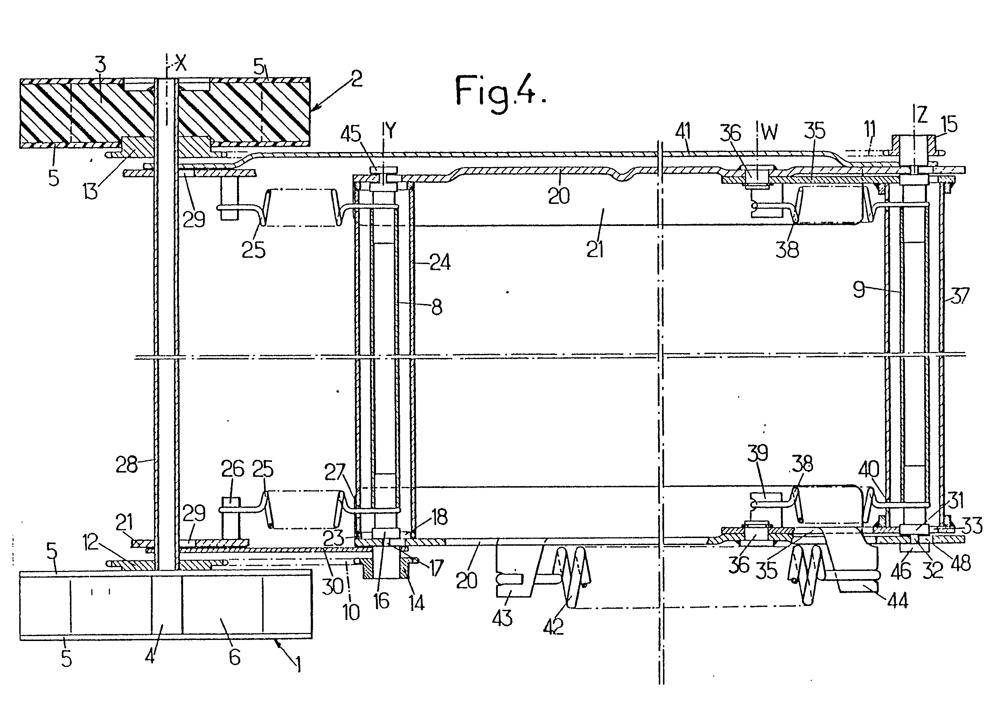

Pour éviter tout déboîtement axial entre les pions 17, 32 et les dentures correspondantes 19, 34, il est avantageux de coiffer ces pions à leurs extrémités opposées aux galets correspondants 16, 31 par un chapeau cylindrique 45, 46 (figure 4) présentant la même section que ledit galet de façon telle que les dentures soient alors emprisonnées axialement entre ces galets et ces chapeaux. Pour chaque barre, l'un de ces chapeaux constitue le moyeu de la roue dentée d'entraînement correspondante 14, 15.

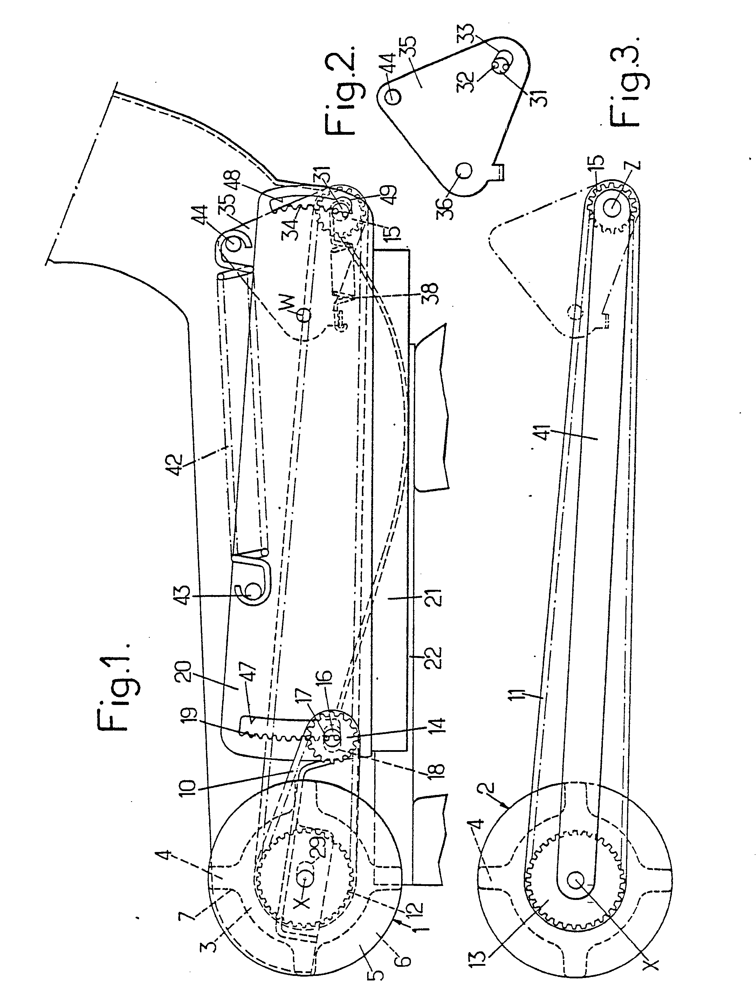

Les dentures 19, 34 constituent de préférence les bords avant de lumières verticales relativement étroites 47, 48 évidées dans les flasques 20, ces lumières étant au besoin élargies localement (voir en 49, figure 1) pour rendre possibles les montages et démontages des barres.

Comme il va de soi, et comme il résulte d'ailleurs déjà de ce qui précède, l'invention ne se limite nullement à ceux de ses modes d'application et de réalisation qui ont été plus spécialement envisagés; elle en embrasse, au contraire, certaines variantes, notamment:

- celles où le réglage assuré à partir d'une manette reportée à l'avant du siège concernerait un autre paramètre que la hauteur avant ou arrière de ce siège, notamment l'inclinaison relative du dossier de ce siège ou la raideur du soutien lombaire des personnes assises sur ledit siège,

- celles où les différents organes de commande reportés à l'avant du siège seraient tous disposés d'un même côté de ce siège au lieu d'être respectivement disposés des deux côtés de celui-ci, ces organes étant alors montés de préférence de façon telle qu'ils soient coaxiaux au repos et qu'à partir de cette position ils puissent être déplacés longitudinalement de quelques millimètres vers l'arrière du siège indépendamment les uns des autres,

- celles où les transmissions à distance des rotations des manettes 1 et 2 seraient assurées par d'autres éléments que des chaînes ou ccurroies crantées, par exemple à l'aide de bandes perforées coagissant avec des roues dentées en correspondance, ou encore à l'aide de câbles souples de transfert de couples, ou même à l'aide de chaînes d'organes électriques comprenant un moteur et un récepteur synchronisés,

- celles où les commandes désirées seraient assurées, de toute manière appropriée, à l'aide de barres rotatives d'axes transversaux fixes et non pas mobiles horizontalement comme dans les modes de réalisation décrits ci-dessus.

**Revendications**

1. Siège de véhicule comprenant une assise un dossier et un mécanisme propre à régler l'inclinaison du dossier ou la hauteur de l'arrière de l'assise, et ce à partir des rotations d'au moins une manette de commande (1, 2) d'axe transversal (X), caractérisé en ce que ladite manette (1, 2) est reportée, ainsi que son axe transversal (X), à l'extrémité avant d'un côté de l'assise de telle façon que le simple repos du bras correspondant de l'usager amène tout naturellement sa main en position sur cette manette, et en ce que le mécanisme de réglage met en oeuvre les rotations d'une barre rigide (8, 9) s'étendant sur toute la largeur du siège, rotations commandées à partir de la manette (1, 2) par l'intermédiaire d'une chaîne ou courroie (10, 11) coopérant avec deux roues dentées ou analogues (12, 13, 14, 15) angulairement solidaires respectivement de cette manette et de cette barre.

2. Siège selon la revendication 1, caractérisé en ce que la barre (8, 9) est solidaire à chacune de ses deux extrémités, d'un galet cylindrique (16, 31) de révolution portant deux pions excentrés parallèles (17, 32) propres à coagir avec une denture (19, 34) comprise par l'embase fixe (21) du siège, et s'étendant selon un arc de cercle sensiblement vertical, ledit galet étant logé jointivement dans une lumière allongée horizontalement (18, 33) liée à l'ossature de l'assise, des moyens élastiques (25, 38) étant associés à la barre de façon à solliciter constamment les pions vers le fond d'encoches des dentures correspondantes, et une bielle rigide (30 41) étant prevue pour maintenir constant l'écartement des axes de l'organe de commande et de la barre en autorisant leurs légers déplacements horizontaux nécessaires pour permettre les dégagements alternatifs des pions hors de leurs encoches à l'encontre de l'effort de rappel des moyens élastiques.

3. Siège équipé de deux mécanismes de réglage selon la revendication 2 destinés à régler respectivement la hauteur de l'avant et celle de l'arrière du siege caractérisé en ce que chacune des deux lumières allongées horizontalement (18 33) qui reçoivent respectivement les deux galets (16, 31) de l'un des deux mécanismes prévus respectivement des deux côtés du siège, est évidée dans un basculeur (35) monté pivotant autour d'un axe transversal fixe (W) de l'embase (21) du siège, axe situé de préférence au niveau du milieu de la denture correspondant au galet considéré, denture qui est centrée sur ledit axe.

4. Siège selon la revendication 3, pour lequel les basculeurs sont associés au mécanisme de réglage de hauteur arrière, caractérisé en ce que des moyens élastiques (42) sont prévus pour solliciter angulairement en permanence les basculeurs dans le sens correspondant à une élévation de l'arrière du siège, ces moyens étant avantageusement constitués par au moins un fort ressort hélicoïdal de tension tendu, selon une direction sensiblement horizontale, entre un point (43) de l'embase du siège et un point haut (44) de l'un des deux basculeurs.

5. Siège selon l'une quelconque des revendications 3 et 4, caractérisé en ce que les deux basculeurs (35) sont constitués par des plaques réunies entre elles par un tube transversal rigide (37) dont les extrémités sont fixées sur ces basculeurs.

6. Siège selon la revendication 5, caractérisé en ce que le tube rigide (37) est traversé par la barre rigide (9) reliant entre eux les deux galets (31) du mécanisme arrière.

## Patentansprüche

1. Fahrzeugsitz, der aus einem Sitzteil, einer Rückenlehne und einer Einrichtung besteht, mit der die Neigung der Rückenlehne oder die Höhe des hinteren Teils des Sitzes, ausgehend von Drehbewegungen wenigstens eines Handhebels mit einer quer verlaufenden Achse, verstellbar ist, dadurch gekennzeichnet, daß der Handhebel (1, 2) ebenso wie seine quer verlaufende Achse (X) am vorderen Ende einer Seite des Sitzes so angebracht sind, daß, wenn sich der entsprechende Arm des Benutzers in der Ruhestellung befindet, dessen Hand ganz natürlich auf diesem Hebel zu liegen kommt und daß der Verstellmechanismus Rotationsbewegungen einer starren Stange (8, 9) bewirkt, die sich über die gesamte Breite des Sitzes erstreckt, wobei die Rotationsbewegungen, ausgehend von dem Handhebel (1, 2) durch Zwischenschalten einer Kette oder eines Riemens (10, 11) gesteuert werden, die mit zwei Zahnrädern oder entsprechend ausgebildeten Teilen (12, 13, 14, 15) zusammenwirkt, die winkelverbunden an dem Handhebel bzw. der Stange angebracht sind.

2. Fahrzeugsitz nach Anspruch 1, dadurch gekennzeichnet, daß die Stange (8, 9) an beiden Enden mit einer zylindrischen Lagerrolle (16, 31) verbunden ist, an der zwei parallele, exzentrisch angeordnete Pione oder Zapfen (17, 32) sitzen, die mit einer Zahnung (19, 34) zusammenwirken, die in dem festen Unterbau (21) des Sitzes ausgenommen ist und sich längs eines Kreisbogens praktisch senkrecht erstreckt, daß die Rolle dicht in einer in dem Gestell des Sitzes angebrachten länglichen horizontalen Öffnung (18, 33) gelagert ist, daß elastische Mittel (25, 28) an der Stange angebracht sind, die die Pione ständig in Richtung des Bodens der Zahnlücken drücken und daß eine starre Verbindungsstange (30, 41) vorgesehen ist, um den Abstand der Achsen des Verstellmechanismus und der Stange (8, 9) unter Zulassung geringfügiger waagerechter Verschiebungen, die notwendig sind, um den abwechselnden Austritt der Pione aus den Zahnlücken entgegen der Wirkung der elastischem Mittel zu ermöglichen, konstant zu halten.

3. Fahrzeugsitz, der mit zwei Verstelleinrichtungen gemäß Anspruch 2 versehen ist, mit denen die Höhe des vorderen bzw. hinteren Teils des Sitzes verstellbar ist, dadurch gekennzeichnet, daß beide länglichen, horizontal verlaufenden Öffnungen (18, 33), die die beiden Rollen (16 bzw. 31) einer der beiden Einrichtungen aufnehmen, die auf beiden Seiten des Sitzes vorgesehen sind, in einem Kipphebel (35) angebracht sind, der um eine feste Querachse (W) des Unterbaus (21) des Sitzes schwenkbar ist, wobei die Achse vorzugsweise in Höhe der Mitte der der betrachteten Rolle entsprechenden Zahnung liegt, welche Zahnung auf dieser Achsezentriert ist.

4. Fahrzeugsitz nach Anspruch 3, bei dem die Kipphebel mit einer Einrichtung zum Verstellen der hinteren Höhe des Sitzes verbunden sind, dadurch gekennzeichnet, daß elastische Mittel (42) vorgesehen sind, um die Kipphebel dauernd winklig in einer Richtung zu beanspruchen, die einem Anheben des hinteren Teils des Sitzes entsprechen würde, wobei diese Mittel vorteilhafterweise aus wenigstens einer starken Zugfeder bestehen, die in einer praktisch waagerechten Richtung zwischen einem Punkt (43) des Unterbaus des Sitzes und einem höhergelegenen Punkt (44) einer der beiden Kipphebel verspannt ist.

5. Fahrzeugsitz nach einem der Ansprüche 3 und 4 dadurch gekennzeichnet, daß die beiden Kipphebel (35) aus Platten bestehen, die miteinander durch ein starres, quer verlaufendes Rohr (37) verbunden sind, dessen Enden an den Kipphebeln befestigt sind.

6. Fahrzeugsitz näch Anspruch 5, dadurch gekennzeichnet, daß die starre Stange (9), die die beiden Rollen (31) des hinteren Mechanismus miteinander verbindet, durch das starre Rohr (37) verläuft.

## Claims

1. Vehicle seat comprising a sitting portion, a seat back and a mechanism adapted to adjust the tilt of the seat back or the height of the rear of the sitting portion, and this from rotations of at least a control member (1,2) with a transverse axis (X), characterized in that said control member (1,2) is brought forward, including its axis of rotation (X), to the front end of a side of the sitting portion so as the simple rest of the corresponding arm of the seated user brings quite naturally his hand into position on said control member and in that the adjustment mechanism uses the rotations of a rigid bar (8, 9) extending over the whole width of the seat, these rotations being controlled from the control member (1, 2) through a chain or belt (10, 11) cooperating with two toothed wheels or similar (12,13, 14, 15) angularly interlocked respectively with this control member and with this bar.

2. Seat according to claim 1, characterized in that the bar (8, 9) is integral, at each of its two ends, with a roller (16, 31) cylindrical in revolution bearing two parallel eccentric pins (17, 32) adapted to coact with a set of teeth (19, 34) provided on the fixed base (21) of the seat, and extending over a substantially vertical arc of a circle, said roller being housed jointingly in a horizontally elongated aperture (18, 33) connected with the framework of the sitting portion, resilient means (25, 38) being associated with the bar so as to constantly urge the pins to the bottom of notches in the corresponding sets of teeth, and a rigid link (30, 41) being provided to maintain the spacing between the axes of the control member and the bar constant while allowing slight horizontal movements thereof required for allowing the alternate disengagement of the pins from their notches against the return force of the resilient means.

3. Seat equipped with two adjustment mechanisms according to claim 2 for adjusting respectively the height of the front and that of the rear of the seat, characterized in that each of the two horizontally elongated apertures (18, 33) which receive respectively the two rollers (16, 31), of one of the two mechanisms, provided respectively on both sides of the seat, is cut out in a rocking lever (35) pivotably mounted about a transverse fixed axis (W) of the base (21) of the seat, this axis being situated preferably at the level of the middle of the set of teeth corresponding to the roller considered, this set of teeth being centred on said axis.

4. Seat according to claim 3, in which the rocking levers are associated with the rear height adjustment mechanism, characterized in that resilient means (42) are provided for permanently angularly urging the rocking levers in the direction corresponding to raising of the rear of the seat, these means being advantageously formed by at least one strong helical tension spring stretched, in a substantially horizontal direction, between a point (43) on the base of the seat and a high point (44) on one of the two rocking levers.

5. Seat according to any one of claims 3 and 4, characterized in that the two rocking levers (35) are formed by plates connected together by a rigid transverse tube (37) whose ends are fixed to these rocking levers.

6. Seat according to claim 5, characterized in that the rigid tube (37) has passing therethrough the rigid bar (9) connecting together the two rollers (31) of the rear mechanism.

Fig.1.

Fig.2.

Fig.3.

Fig.4.

# Fig.5.